# EUROPÄISCHE PATENTSCHRIFT

(11) **EP 3 601 135 B1**
(45) Veröffentlichungstag und Bekanntmachung des Hinweises auf die Patenterteilung: **12.05.2021**
(21) Anmeldenummer: 18712886.3
(22) Anmeldetag: 22.03.2018
(51) Int. Cl.: B66B 7/02

(54) **VERFAHREN ZUM BEFESTIGEN EINER SCHIENE EINER AUFZUGSANLAGE IN EINEM AUFZUGSSCHACHT**
METHOD OF ATTACHING A RAIL OF AN ELEVATOR ASSEMBLY IN AN ELEVATOR SHAFT
PROCÉDÉ DE FIXATION D'UN RAIL D'ASCENSEUR DANS UNE CAGE D'ASCENSEUR

(30) Priorität: 28.03.2017 EP 17163212
(43) Veröffentlichungstag der Anmeldung: 05.02.2020
(73) Patentinhaber: Inventio AG, 6052 Hergiswil (CH)
(72) Erfinder: FERRI, Emanuele, 8932 Mettmenstetten (CH); SONNER, Torsten, 6030 Ebikon (CH); MÖRI, Peter, 6023 Rothenburg (CH)
(86) Internationale Anmeldenummer: PCT/EP2018/057263
(87) Internationale Veröffentlichungsnummer: WO 2018/177870

(56) Entgegenhaltungen:
- EP-A1- 0 432 237
- ES-A1- 2 421 083
- US-B1- 6 305 615

## Beschreibung

Die Erfindung betrifft ein Verfahren zum Befestigen einer Schiene einer Aufzugsanlage in einem Aufzugsschacht, ein Klemmset zum Befestigen einer Schiene einer Aufzugsanlage in einem Aufzugsschacht und eine Aufzugsanlage, die in einem Aufzugsschacht montiert ist.

Aus der ES 2 421 083 A1 ist ein Schienenfußhalter bekannt, bei dem im montierten Zustand ein laterales Teil eines Körpers auf eine Oberseite eines Seitenteils eines Schienenfußes drückt. Hierbei ist das laterale Teil einerseits einer Befestigungsachse für den Körper angeordnet, während sich andererseits der Befestigungsachse ein elastisches Material befindet, das den Körper unterstützt. Eine Schraube wird entlang der Befestigungsachse angezogen, wobei ein Kopf der Schraube auf den Körper drückt, was einerseits die Andruckkraft über den lateralen Teil zum Halten des Schienenfußes aufbringt und andererseits den Körper in Kontakt mit dem elastischen Material hält. Wenn nun der laterale Teil des Körpers von der Oberseite des Seitenteils des Schienenfußes angehoben wird, dann kommt es zur zunehmenden Komprimierung des elastischen Materials, wobei durch die Ausformung und Zusammenwirkung des Kopfes der Schraube mit dem Körper eine diesbezügliche Schwenkfunktion ermöglicht ist.

Die aus der ES 2 421 083 A1 bekannte Ausgestaltung hat den Nachteil, dass zur Realisierung der Schwenkfunktion eine Bewegung beziehungsweise Schwenkung des Körpers um den feststehenden Kopf erforderlich ist, wobei hierbei zwischen diesen eine Haft- beziehungsweise Gleitreibung überwunden werden muss. Dadurch kann die gewünschte Halte- beziehungsweise Federkraft nur unzureichend über das elastische Material vorgegeben werden. Ferner kann das elastische Material seine Funktionsfähigkeit aufgrund einer Bauteilalterung verlieren. Des Weiteren besteht bei der Montage das Problem, dass die Anzugskraft für die Schraube sehr dosiert aufgebracht werden muss und die Gefahr einer Überlastung des elastischen Materials bei einem versehentlichen Festziehen besteht.

Aufzugsanlagen sind in der Regel in Gebäude eingebaut. Schienen, insbesondere Führungsschienen, können dabei an einer Gebäudewand befestigt werden und erstrecken sich dann über eine gesamte Fahrstrecke des Aufzugs, was vielfach annähernd einer Höhe des Gebäudes entspricht. Speziell Führungsschienen müssen dabei so stark im Gebäude befestigt werden, dass sie seitliche Führungskräfte, die beispielsweise beim Führen einer Aufzugskabine oder eines Gegengewichts auftreten, sicher aufnehmen können. Speziell bei einem neu errichteten Gebäude verändert sich allerdings die Gebäudehöhe über die Zeit. So schrumpft das Gebäude infolge der Austrocknung und Setzung auch noch nach seiner Fertigstellung. Aber auch durch Temperaturänderungen und Sonneneinstrahlungen können Veränderungen der Gebäudehöhe bewirkt werden.

Nach der Fertigstellung des Gebäudes beziehungsweise der Aufzugsanlage auftretende Änderungen der Gebäudehöhe bedingen mechanische Kräfte in den Führungsschienen, so dass es bei entsprechender Befestigung zu einer Verschiebung der Führungsschienen relativ zu dem Gebäude kommt. Bei einer Gebäudeschrumpfung wachsen die Führungsschienen beispielsweise in Relation zum Gebäude. Um Deformationen von Schienenabschnitten zu vermeiden, müssen Befestigungspunkte der betreffenden Führungsschiene so ausgeführt sein, dass ein Längenausgleich in Bezug auf einen sich ändernden Abstand zwischen Befestigungspunkten, also ein Längenausgleich, ermöglicht ist. Gleichzeitig muss aber auch eine genügende Befestigung zur Aufnahme von Kräften, insbesondere Führungskräften, an den Befestigungspunkten gewährleistet werden.

Aufgabe der Erfindung ist es, ein Verfahren zum Befestigen einer Schiene einer Aufzugsanlage, ein Klemmset zum Befestigen einer Schiene einer Aufzugsanlage und eine Aufzugsanlage anzugeben, die verbessert ausgestaltet sind. Speziell kann sich hierbei die Aufgabe stellen, eine verbesserte Montage und/oder eine verbesserte Vorgabe einer an einem Befestigungspunkt der Schiene wirkenden Befestigungskraft zu ermöglichen.

Im Folgenden sind Lösungen und Vorschläge für eine entsprechende Ausgestaltung angegeben, die ein Verfahren zum Befestigen einer Schiene einer Aufzugsanlage, ein Klemmset zum Befestigen einer Schiene einer Aufzugsanlage und eine Aufzugsanlage betreffen und zumindest Teile der gestellten Aufgabe lösen. Des Weiteren sind vorteilhafte ergänzende oder alternative Weiterbildungen und Ausgestaltungen angegeben beziehungsweise beschrieben.

Bei einer Lösung kann ein Verfahren zum Befestigen einer Schiene einer Aufzugsanlage an zumindest einem ortsfest in einem Aufzugsschacht angeordneten Anlagekörper mittels zumindest eines Klemmsets, das eine Klemme und einen Abstandshalter aufweist, realisiert werden, wobei die Klemme so an einem an dem Anlagekörper angeordneten Seitenteil eines Schienenfußes der Schiene angeordnet wird, dass die Klemme an einer Befestigungszone der Klemme mit dem Anlagekörper verbindbar ist und dass eine Auflagezone der Klemme an einer Anlageseite an einer Oberseite des Seitenteils des Schienenfußes angeordnet ist, wobei mittels des Abstandshalters ein Montageabstand zwischen der Auflagezone der Klemme und der Anlageseite an der Oberseite des Seitenteils des Schienenfußes so vorgegeben wird, dass beim Verbinden der Klemme an ihrer Befestigungszone mit dem Anlagekörper die Klemme teilweise elastisch und teilweise plastisch verformt wird, und wobei der Abstandshalter zumindest teilweise entfernt wird und/oder so ausgestaltet wird, dass ein Abstand zwischen der Auflagezone der Klemme und der Anlageseite an der Oberseite des Seitenteils des Schienenfußes zumindest im Zeitverlauf gegenüber dem Montageabstand zumindest reduziert wird.

Dass der Abstand zwischen der Auflagezone der Klemme und der Anlageseite an der Oberseite des Seitenteils des Schienenfußes zumindest im Zeitverlauf gegenüber dem Montageabstand "zumindest reduziert" wird, umfasst den Fall, dass der Montageabstand ganz verschwindet, zum Beispiel wenn der Abstandshalter entfernt wird.

Ferner kann bei einer Lösung ein Klemmset, das zum Befestigen einer Schiene einer Aufzugsanlage an zumindest einem ortsfest in einem Aufzugsschacht angeordneten Anlagekörper dient, realisiert werden, wobei das Klemmset eine Klemme und einen Abstandshalter aufweist, wobei die Klemme so mit einer Befestigungszone und einer Auflagezone ausgestaltet ist, dass diese an einem an dem Anlagekörper angeordneten Seitenteil eines Schienenfußes der Schiene anordenbar, mit ihrer Befestigungszone mit dem Anlagekörper verbindbar und mit ihrer Auflagezone an einer Anlageseite an einer Oberseite des Seitenteils des Schienenfußes anordenbar ist, wobei der Abstandshalter so ausgestaltet ist, dass mittels diesem ein Montageabstand zwischen der Auflagezone der Klemme und der Anlageseite an der Oberseite des Seitenteils des Schienenfußes so vorgebbar ist, dass beim Verbinden der Befestigungszone mit dem Anlagekörper die Klemme teilweise elastisch und teilweise plastisch verformbar ist, und wobei der Abstandshalter zumindest teilweise entfernbar oder so ausgestaltet ist, dass ein Abstand zwischen der Auflagezone der Klemme und der Anlageseite an der Oberseite des Seitenteils des Schienenfußes im montierten Zustand zumindest im Zeitverlauf gegenüber dem Montageabstand reduziert wird, beziehungsweise reduzierbar ist. Anders gesagt ist bei dieser Ausgestaltung der Abstandshalter so ausgeführt, dass sich der Abstand zwischen der Auflagezone der Klemme und der Anlageseite an der Oberseite des Seitenteils des Schienenfußes im Zeitverlauf gegenüber dem Montageabstand reduziert. Das angegebene Klemmset dient zum Befestigen einer Schiene einer Aufzugsanlage in einem Aufzugsschacht, wobei vorzugsweise eine Vielzahl solcher Klemmsets zum Einsatz kommt. Das Klemmset kann hierbei ganz oder teilweise Bestandteil der Aufzugsanlage werden. Die Schiene und der Anlagekörper sind jedoch keine Bestandteile des erfindungsgemäßen Klemmsets und das Klemmset kann auch unabhängig von diesen hergestellt und vertrieben werden.

Des Weiteren kann bei einer Lösung eine Aufzugsanlage mit zumindest einer Schiene realisiert werden, die mit dem angegebenen Verfahren in einem Aufzugsschacht montiert ist. Bei der Durchführung solch eines Verfahrens kann die Schiene in vorteilhafter Weise mittels zumindest eines Klemmsets montiert werden. Bei der Inbetriebnahme der Aufzugsanlage können Bestandteile des Klemmsets, insbesondere der Abstandshalter, allerdings auch bereits wieder entfernt sein. Somit weist die Aufzugsanlage im Betrieb nicht notwendigerweise alle Bestandteile des Klemmsets auf, die bei der Montage zum Einsatz kommen.

Eine Schiene (Aufzugsschiene) der Aufzugsanlage besteht in der Regel aus mehreren Schienenabschnitten, die beispielsweise bei der Errichtung der Aufzugsanlage entlang ihrer Erstreckung aneinander gefügt werden, um dann im montierten Zustand insgesamt die Schiene zu bilden. Vorzugsweise wird jeder der Schienenabschnitte über ein oder mehrere vorgeschlagene Klemmsets in dem Aufzugsschacht montiert. Die Montage in dem Aufzugsschacht kann hierbei über den Anlagekörper an einer Wand des Aufzugsschachtes erfolgen. Allerdings sind auch andere Möglichkeiten vorstellbar, beispielsweise eine Montage des Anlagekörpers an einer geeigneten Tragstruktur. Ferner ist es möglich, dass ein Anlagekörper für mehrere Klemmsets, insbesondere für zwei Klemmsets, dient, die den Schienenfuß an gegenüberliegenden Stellen an seinen beiden Seitenteilen befestigen. Hierbei können bei der Montage noch weitere Elemente und/oder Bauteile montiert werden. Beispielsweise kann die Schiene direkt oder auch mittels einer Gleitlage an dem Abstandshalter angelegt werden. Ferner kann zusätzlich oder alternativ zu solch einer Gleitlage auch eine Zwischenlage vorgesehen sein. Das Klemmset kann an solche zusätzlichen Lagen, insbesondere eine Gleitlage oder Zwischenlage, angepasst sein. Allerdings kann auch der Einsatz einer Zwischenlage dem Zweck dienen, den Schienenfuß an eine vorgegebene Montagebedingung anzupassen.

Des Weiteren können zusätzliche Elemente, insbesondere Abstandselemente, wie Beilag- oder Zwischenscheiben, auch in Bezug auf den Abstandshalter montiert werden. Durch solche Elemente kann gegebenenfalls der Montageabstand zwischen der Befestigungszone des Abstandshalters und dem Anlagekörper an die Montagebedingungen angepasst werden.

Somit sind verschiedene Anpassungen des angegebenen Verfahrens, des angegebenen Klemmsets und der angegebenen Aufzugsanlage realisierbar, die in Bezug auf den jeweiligen Anwendungsfall eine geeignete Befestigung der Schiene in dem Aufzugsschacht ermöglichen. Dadurch ergibt sich ein großer Anwendungsbereich der vorgeschlagenen Lösungen.

In vorteilhafter Weise kann beim Montieren der Aufzugsanlage mittels des zumindest einen Klemmsets eine verbesserte Einstellung in Bezug auf eine spielfreie Befestigung der Schiene erfolgen. Dies ermöglicht insbesondere einen Ausgleich von Fertigungstoleranzen der Schiene, die speziell eine Materialstärke des Schienenfußes betreffen können. Der Ausgleich von Fertigungstoleranzen der Schiene beinhaltet zumindest eine Reduktion eines Einflusses der Fertigungstoleranzen auf Befestigungskräfte der Schiene. Beispielsweise kann die Materialstärke des Schienenfußes von Schienenabschnitt zu Schienenabschnitt schwanken. Wenn solche Schienenabschnitte dann bei der Montage aneinander gefügt werden, um die sich durch den Aufzugsschacht erstreckende Schiene zu bilden, dann ist in Bezug auf den jeweiligen Schienenabschnitt eine individuelle Einstellung des erforderlichen Haltemaßes ermöglicht. Hierbei kann der Vorteil realisiert werden, dass sich auch bei unterschiedlichen Haltemaßen eine geringe Variationsbreite für die individuell realisierte Klemmkraft ergibt. Dies reduziert entsprechend die Variationsbreite für Reibungskräfte, die in Bezug auf den gewünschten Längenausgleich zwischen der Schiene und dem Gebäude relevant sind. Insbesondere kann beim Einsatz einer Vielzahl von Klemmsets die Variationsbreite der realisierten Klemmkräfte um einen Sollwert für die Klemmkraft vergleichsweise schmal gewährleistet werden. Dadurch kann sowohl die gegebenenfalls minimal erforderliche Klemmkraft zuverlässig gewährleistet werden als auch ein gewünschtes Längenausgleichsverhalten realisiert werden.

Vorteilhaft ist es, dass ein Toleranzbereich für ein zwischen der Anlageseite an der Oberseite des Seitenteils und dem Anlagekörper für das Seitenteil des Schienenfußes vorgegebenes Soll-Haltemaß bestimmt wird und dass der mittels des Abstandshalters vorgegebene Montageabstand den bestimmten Toleranzbereich für das Soll-Haltemaß in einen flach verlaufenden Bereich einer Verformungskurve der Klemme verschiebt. Das Soll-Haltemaß kann in Bezug auf den jeweiligen Anwendungsfall definiert sein. Beispielsweise kann das Soll-Haltemaß zwischen der Oberseite des Seitenteils und einer Unterseite des Seitenteils für einen idealtypischen Schienenfuß definiert sein. Wesentlich ist hier die Betrachtung des Toleranzbereichs. Der Toleranzbereich (Gesamt-Toleranzbereich) soll vorzugsweise alle bei der Montage des Anlagekörpers relevanten Toleranzen berücksichtigen. Diesbezüglich kann das Soll-Haltemaß auch weitere, gegebenenfalls vorgesehene Lagen, insbesondere eine Gleitlage und/oder eine Zwischenlage, umfassen, wenn sich durch solche Lagen zusätzliche relevante Auswirkungen auf den Toleranzbereich ergeben. Dadurch können neben beispielsweise herstellungsbedingten Variationen in der Ausgestaltung des Schienenfußes auch weitere beispielsweise herstellungsbedingte Toleranzen berücksichtigt werden.

Die Anlageseite an der Oberseite des Seitenteils stimmt nicht notwendigerweise mit der Oberseite des Seitenteils überein. Insbesondere kann an der Oberseite des Seitenteils eine Gleitlage, beispielsweise in Form einer Beschichtung der Oberseite des Seitenteils, vorgesehen sein, an der dann die Anlageseite realisiert ist. Mögliche Toleranzen solch einer Gleitlage gehen dann ebenfalls in den Toleranzbereich ein.

Vorteilhaft ist es ebenfalls, dass der Toleranzbereich für das Soll-Haltemaß zumindest aus einem konstruktionsgemäß vorgegebenen und/oder empirisch bestimmten Toleranzbereich für das Seitenteil des Schienenfußes und gegebenenfalls aus einem konstruktionsgemäß vorgegebenen und/oder empirisch bestimmten Toleranzbereich zwischen der Anlageseite an der Oberseite des Seitenteils des Schienenfußes und der Oberseite des Seitenteils des Schienenfußes bestimmt wird. Der Toleranzbereich zwischen der Anlageseite an der Oberseite des Seitenteils und der Oberseite des Seitenteils kann sich hier beispielsweise durch die genannte Gleitlage ergeben. Zumindest ein weiterer Toleranzbereich kann sich durch eine Zwischenlage und/oder eine Gleitlage ergeben, die bei der Montage der Schiene zwischen einer Unterseite des Schienenfußes und dem Anlagekörper angebracht werden können, wenn dies im jeweiligen Anwendungsfall vorgesehen ist. Ferner kann sich ein zusätzlicher Toleranzbereich auch zwischen der Auflagezone der Klemme und dem Anlagekörper ergeben, wenn hierbei zusätzliche Elemente, insbesondere Einstell- oder Beilagscheiben, zum Einsatz kommen.

Eine empirische Bestimmung des relevanten Toleranzbereichs für das Soll-Haltemaß ist besonders vorteilhaft, da sich bei der Herstellung oftmals geringere Toleranzen ergeben. Ein konstruktiv vorgegebener Toleranzbereich kann sich beispielsweise aufgrund eines geeigneten Standards ergeben, während für den Einbau die fertigungsbedingten Schwankungen relevant sind. Beispielsweise können gemäß dem ISO-Standard ISO 7465 die Dickenabmessungen des Schienenfußes eine Toleranz von +/- 0,75 mm aufweisen. Konstruktiv beziehungsweise normgemäß könnte im Extremfall somit ein Toleranzbereich für das Soll-Haltemaß von 1,5 mm zu berücksichtigen sein. In der Praxis sind hingegen Abweichungen außerhalb einer Bandbreite von +/- 0,5 mm, was einem Toleranzbereich von 1 mm entspricht, sehr selten. Der Toleranzbereich kann dann empirisch beispielsweise als 1 mm oder kleiner bestimmt werden. Da der mittels des Abstandshalters vorgegebene Montageabstand vorzugsweise zumindest in Bezug zu dem bestimmten Toleranzbereich für das Soll-Haltemaß vorgegeben wird, kann dann durch die Wahl eines diesbezüglichen Toleranzbereichs von beispielsweise 1,0 mm eine ausreichend gute empirische Festlegung erfolgen, die bei der Montage eine genügend gute Anpassung ermöglicht.

Vorteilhaft ist es, dass die Anlageseite an der Oberseite des Seitenteils des Schienenfußes als Oberseite des Seitenteils des Schienenfußes gewählt beziehungsweise vorgegeben wird. Bei einer alternativen Ausgestaltung kann eine Gleitlage vorgesehen sein oder montiert werden, die an der Oberseite des Seitenteils des Schienenfußes angebracht ist beziehungsweise wird und die dann in vorteilhafter Weise als Anlageseite an der Oberseite des Seitenteils des Schienenfußes vorgegeben ist beziehungsweise gewählt wird. Somit kann begrifflich zwischen der Anlageseite an der Oberseite des Seitenteils des Schienenfußes unterschieden werden. Die Anlageseite gibt hierbei den Ort an, an dem die Auflagezone der Klemme letztlich anliegt, wenn der Abstandshalter entfernt ist, sofern ein vollständiges Entfernen des Abstandshalters realisiert wird. Je nach Ausgestaltung des Verfahrens beziehungsweise des Klemmsets kann der Abstandshalter direkt an der Anlageseite an der Oberseite des Seitenteils des Schienenfußes anliegen, wenn der Abstandshalter montiert ist. Bei einer möglichen alternativen Ausgestaltung kann jedoch auch genau die Stelle, an der die Auflagezone der Klemme an der Auflageseite anliegt, wenn der Abstandshalter entfernt ist, an dem Abstandshalter ausgespart sein. Dann kann der Abstandshalter zumindest in einer Umgebung des so vorgegebenen Kontaktpunkts an der Anlageseite anliegen, um die Montage durchzuführen. Somit kann die Anlageseite bei einer möglichen Ausgestaltung in der Oberseite des Seitenteils des Schienenfußes liegen, während bei einer möglichen weiteren Ausgestaltung die Anlageseite von der Oberseite des Seitenteils des Schienenfußes beabstandet ist, beispielsweise aufgrund einer sich an der Oberseite des Seitenteils befindenden Gleitlage.

Bei einer vorteilhaften Ausgestaltung ist es vorteilhaft, dass der Abstandshalter vorzugsweise unmittelbar nach dem Verbinden der Klemme an ihrer Befestigungszone mit dem Anlagekörper entfernt wird. Der Montagevorgang kann dann beispielsweise die folgenden drei Schritte aufweisen. In einem ersten Schritt wird der Abstandshalter zwischen der Auflagezone der Klemme und der Anlageseite an der Oberseite des Seitenteils angebracht. In einem zweiten Schritt wird die Klemme an ihrer Befestigungszone beispielsweise mittels einer Schraube befestigt, wobei die Schraube auf Anschlag angezogen wird. In einem dritten Schritt wird der Abstandshalter entfernt oder zumindest entspannt, wobei das Entfernen gegebenenfalls über ein zumindest teilweises, vorübergehendes Lösen der Schraube erleichtert oder ermöglicht werden kann. Ein Entspannen kann erreicht werden, wenn beispielsweise eine Schraube als Abstandshalter verwendet wird. Gegebenenfalls kann der Abstandshalter auch zu einem etwas späteren Zeitpunkt, aber zumindest vor der Inbetriebnahme oder Wiederinbetriebnahme der Aufzugsanlage entfernt werden.

Bei einer weiteren möglichen Ausgestaltung ist es vorteilhaft, dass der Abstandshalter nach dem Verbinden der Klemme an ihrer Befestigungszone mit dem Anlagekörper und zumindest bei der Inbetriebnahme oder Wiederinbetriebnahme der Aufzugsanlage zumindest teilweise montiert bleibt und dass der Abstandshalter so aus einem Werkstoff ausgewählt wird, dass der zumindest teilweise montierte Abstandshalter im Betrieb ein Kriechverhalten aufweist. Hierbei ist es ferner von Vorteil, wenn der Abstandshalter aus einem Werkstoff ausgewählt wird, der im Hinblick auf eine Bewegung des Schienenfußes relativ zu dem Anlagekörper und der mit dem Anlagekörper verbundenen Klemme reibungsreduzierend wirkt. Der zumindest teilweise noch während des Betriebs montierte Abstandshalter bedingt dann nach der Inbetriebnahme oder Wiederinbetriebnahme der Aufzugsanlage zunächst eine erhöhte Klemmkraft, was für sich betrachtet eine Erhöhung der bei einem Längenausgleich auftretenden Reibungskräfte zur Folge hat. Die Wahl eines reibungsreduzierend wirkenden Werkstoffs für den Abstandshalter wirkt hingegen für sich betrachtet reibungsreduzierend, was den Effekt der höheren Klemmkraft zumindest teilweise kompensieren kann. Durch das Kriechverhalten des Werkstoffs ergibt sich dann eine Annäherung der Auflagezone der Klemme an die Anlageseite an der Oberseite des Seitenteils, was die Klemmkraft verringert und somit gegebenenfalls erforderliche Längenausgleiche erleichtert. Der Vorteil dieser Lösung besteht unter anderem im Entfall eines Arbeitsschritts bei der Montage.

Die Klemme ist vorzugsweise so ausgestaltet, dass sich diese in bestimmten Bereichen beziehungsweise Zonen bei der Montage plastisch verformen kann, während eine solche plastische Verformung in anderen Bereich beziehungsweise Zonen nicht auftritt. Insbesondere ist es vorteilhaft, wenn sich die Befestigungszone und eine Seitenzone, die beispielsweise zur seitlichen Führung des Schienenfußes dienen kann, zumindest im Wesentlichen nicht plastisch verformen, wenn die Klemme bei der Montage mit dem Anlagekörper verbunden wird. Dies schließt jedoch nicht aus, dass eine dem Anlagekörper zugewandte Seite der Befestigungszone strukturiert ausgestaltet ist, um beim Festziehen eine zusätzliche Sicherung gegenüber Verdrehen der Klemme relativ zu dem Anlagekörper um eine Befestigungsachse zu erzielen. Hierbei mögliche, auf oberflächennahe Bereiche beschränkte plastische Verformungen, die sich nicht auf die Klemmkraft aufwirken, werden hier als vernachlässigbar für die betrachtete Funktion der Klemme angesehen. Beim Einsatz von zumindest einem zusätzlichen Montageelement, insbesondere einer Beilagscheibe, zwischen der Befestigungszone der Klemme und dem Anlagekörper können beispielsweise auch an solch einem Element strukturierte Seiten beziehungsweise Oberflächen ausgestaltet sein, die sich bei der Montage zumindest etwas in die zugewandte Seite der Befestigungszone und die entsprechende Oberseite des Anlagekörpers einpressen. Solche plastische Verformungen, die ebenfalls nur oberflächennah auftreten, werden hier ebenfalls vernachlässigt.

Vorteilhaft ist es, dass an der Klemme ein verjüngter Bereich ausgestaltet wird, der sich von der Auflagezone zumindest abschnittsweise entlang einer sich an die Auflagezone anschließenden Federzone der Klemme erstreckt. Um eine Aufteilung der Klemme in Bereiche beziehungsweise Zonen zu ermöglichen, in denen eine plastische Verformung auftritt, kommt vorzugsweise eine konstruktive Anpassung zum Einsatz. Hierbei kann beispielsweise die Materialstärke in der Befestigungs- und Seitenzone größer vorgegeben sein als in einer Übergangs-, Feder- und Auflagezone. Dies kann zusätzlich oder alternativ zu einer konstruktiven Lösung realisiert werden, bei der sich der genannte verjüngte Bereich von der Auflagezone zu der Federzone erstreckt. Des Weiteren kann sich der verjüngte Bereich in vorteilhafter Weise auch in oder sogar über eine Übergangszone erstrecken. Durch solche konstruktiven Maßnahmen können definierte Bereiche beziehungsweise Zonen vorgegeben werden, in denen beim Verbinden der Klemme an ihrer Befestigungszone mit dem Anlagekörper Verformungen, insbesondere plastische Verformungen, auftreten. Die konstruktive Ausgestaltung ist hierbei so gewählt, dass lokale Überlastungen, insbesondere die Beeinträchtigung eines gewünschten elastischen Verhaltens, vermieden sind.

Hierbei ist es auch von Vorteil, wenn die Klemme zwischen der Befestigungszone und der Federzone mit einer Seitenzone ausgestaltet ist, wobei die Befestigungszone und die Seitenzone beim Verbinden der Klemme an ihrer Befestigungszone mit dem Anlagekörper im Vergleich zu der Federzone zumindest im Wesentlichen nicht verformt werden. Insbesondere kann durch die Seitenzone eine Führung des Schienenfußes realisiert sein. Durch die Vermeidung einer Verformung der Seitenzone wird vermieden, dass die Seitenzone eine erhöhte Klemmkraft auf den Schienenfuß ausübt, was eine entsprechende Erhöhung einer Reibungskraft bei einem gewünschten Längenausgleich zur Folge hätte. Hierbei kann an der Seitenzone ein geeignetes Gleitmittel vorgesehen sein, das beispielsweise bei der Montage in Form eines Schmiermittels eingebracht wird.

Vorteilhaft ist es hierbei ferner, dass die Klemme zwischen der Federzone und einer beziehungsweise der Seitenzone eine gebogene Übergangszone aufweist und dass sich der verjüngte Bereich der Klemme zumindest abschnittsweise von der Federzone entlang der Übergangszone zu der Seitenzone erstreckt. Somit kann in Bezug auf den jeweiligen Anwendungsfall eine geeignete konstruktive Ausgestaltung der Klemme ermöglicht werden, um eine beim Befestigen der Klemme an dem Anlagekörper gewünschte plastische Verformung auf bestimmte Bereiche oder Zonen zu beschränken. Es sind allerdings auch andere Maßnahmen als die Ausgestaltung eines verjüngten Bereichs und/oder die Variation einer Materialstärke der Klemme entlang ihrer verschiedenen Zonen möglich. Denkbar ist beispielsweise auch die Ausgestaltung von Schlitzen, Öffnungen, insbesondere Bohrungen, oder dergleichen in bestimmten Bereichen oder Zonen, um dort eine plastische Verformung beim Befestigen der Klemme an dem Anlagekörper zu ermöglichen.

Speziell zur Ermöglichung der genannten plastischen und elastischen Verformbarkeit, die sich in einzelnen Bereichen oder Zonen verändern, ist eine Ausgestaltung der Klemme als zumindest teilweise laschenförmige Klemme vorteilhaft. Die Klemme ist hierbei vorzugsweise im Bereich ihrer Auflagezone und zumindest in ihrer Federzone laschenförmig ausgestaltet. Die Ausgestaltung als laschenförmige Klemme wird hier so verstanden, dass beispielsweise ein Auflagebereich in Form einer Rippe oder einer Kuppe zusätzlich an der Auflagezone realisiert sein kann. Speziell kann hierdurch ein geeigneter Auflagebereich an der Auflagezone realisiert werden. Dadurch kann beispielsweise eine punktförmige oder linienförmige Auflage der Klemme an der Anlageseite an der Oberseite des Seitenteils des Schienenfußes vorgegeben werden. Somit kann in vorteilhafter Weise an der Auflagezone der Klemme eine punktförmige oder linienförmige Auflage an der Anlageseite vorgegeben werden. Unter einer punktförmigen Auflage ist im Unterschied zu einer flächigen Auflage eine konstruktiv durch einen Punkt, zum Beispiel einen Punkt auf der Oberfläche einer Halbkugel, bestimmte Auflage zu verstehen. In der Praxis kann es allerdings durch in der Regel unvermeidbare, geringe Verformungen dann zu einer kleinflächigen Auflage an dem konstruktiv bestimmten Punkt kommen. Entsprechend ist eine linienförmige Auflage konstruktiv durch eine Linie, zum Beispiel an einem Halbzylinder, gegeben.

Wenn an der Auflagezone der Klemme eine punktförmige Auflage an der Anlageseite vorgegeben wird, dann ist es ferner von Vorteil, wenn der Abstandshalter mit einer Ausnehmung ausgeführt wird, wobei der Abstandshalter so zwischen der Anlagezone der Klemme und der Anlageseite an der Oberseite des Seitenteils des Schienenfußes montiert wird, dass sich die punktförmige Auflage in der Ausnehmung des Abstandshalters befindet und von der Anlageseite beabstandet ist.

Vorteilhaft ist es ferner, dass der Abstandshalter als zungenförmiger Abstandshalter ausgestaltet ist. Hierbei kann an dem zungenförmigen Abstandshalter eine Griffleiste ausgestaltet sein, die das Entfernen des Abstandshalters nach der plastischen Verformung der Klemme erleichtert. Gegebenenfalls kann der Abstandshalter dann auch ohne ein vorübergehendes Lösen einer Befestigungsschraube oder dergleichen entfernt werden.

Bei einer alternativen Ausgestaltung des Abstandshalters ist es vorteilhaft, wenn der Abstandshalter einen Schraubenbolzen aufweist, wobei der Abstandshalter mit seinem Schraubenbolzen so in eine sich durch die Auflagezone der Klemme erstreckende Gewindebohrung eingeschraubt wird, dass der Montageabstand vorgegeben ist. Nach dem Befestigen der Klemme an ihrer Befestigungszone mit dem Anlagekörper kann dann der Schraubenbolzen des Abstandshalters zumindest teilweise zurückgedreht werden, wodurch sich die Auflagezone der Klemme an die Anlageseite an der Oberseite des Seitenteils annähert.

Bevorzugte Ausführungsbeispiele der Erfindung sind in der nachfolgenden Beschreibung anhand der beigefügten Zeichnungen näher erläutert.
- Fig. 1: zeigt eine auszugsweise, schematische, räumliche Darstellung einer Schiene einer Aufzugsanlage, die mittels Klemmsets an einem Anlagekörper gemäß einem ersten Ausführungsbeispiel der Erfindung befestigt wird, zur Erläuterung eines ersten Ausführungsbeispiels der Erfindung.
- Fig. 2: zeigt eine schematische Schnittdarstellung der in Fig. 1 gezeigten Schiene bei einer Montage zur Erläuterung des ersten Ausführungsbeispiels der Erfindung.
- Fig. 3: zeigt eine schematische Darstellung der in Fig. 1 gezeigten Schiene im montierten Zustand zur Erläuterung des ersten Ausführungsbeispiels der Erfindung.
- Fig. 4: zeigt eine Aufzugsanlage in einer auszugsweisen, schematischen Darstellung, bei der eine Schiene entsprechend dem ersten Ausführungsbeispiel in einem Aufzugsschacht befestigt ist.
- Fig. 5 und Fig. 6: zeigen Diagramme zur Erläuterung der Funktionsweise einer möglichen Ausgestaltung der Erfindung.
- Fig. 7: zeigt das in Fig. 2 dargestellte schematische Schnittbild entsprechend einem zweiten Ausführungsbeispiel der Erfindung.

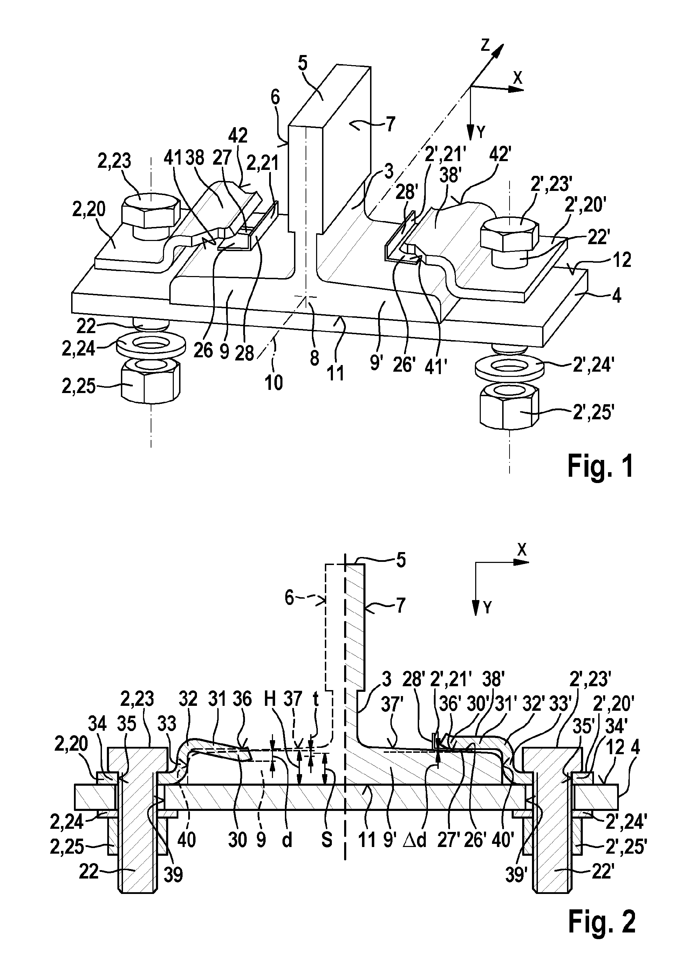

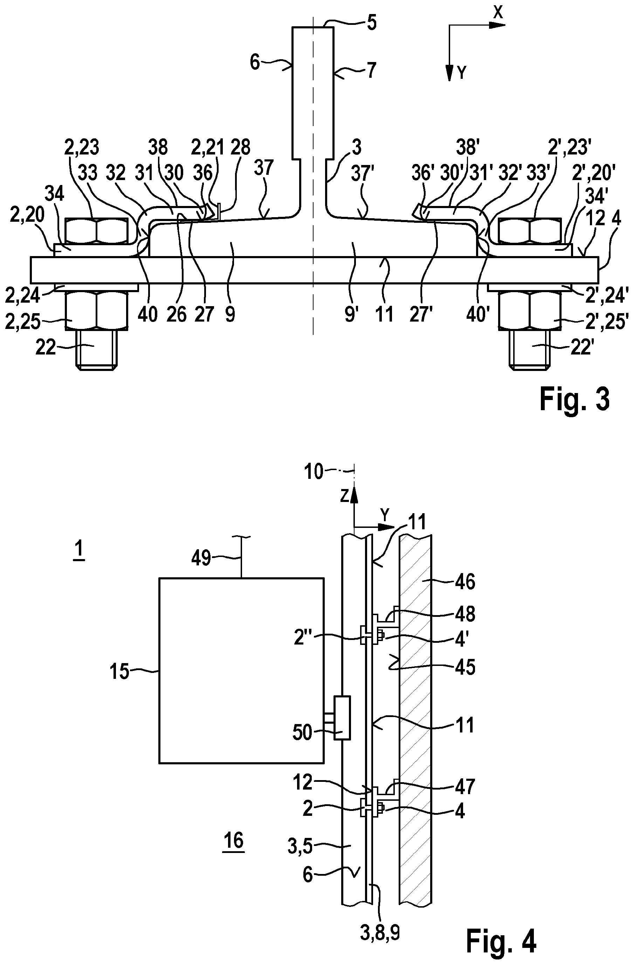

Fig. 1 zeigt eine auszugsweise, schematische, räumliche Darstellung einer Schiene 3 einer Aufzugsanlage 1 (Fig. 4), die mittels eines Klemmsets 2 und eines Klemmsets 2' an einem Anlagekörper 4 befestigt wird, zur Erläuterung eines ersten Ausführungsbeispiels. Die Schiene 3 weist einen Schienenkopf 5 mit Führungsflächen 6, 7 auf. Ferner weist die Schiene 3 einen Schienenfuß 8 mit Seitenteilen 9, 9' auf. Die Schiene 3 erstreckt sich entlang ihrer Erstreckung 10 durch einen Aufzugsschacht 11, wenn die Schiene 3 montiert ist, wie es auch in Fig. 4 veranschaulicht ist. Entlang der Erstreckung 10 wird zur Erläuterung hier eine Richtung Z definiert. Eine Unterseite 11 des Schienenfußes 8 wird bei der Montage an eine Oberseite 12 des Anlagekörpers 4 gelegt. Durch die Oberseite 12 wird hierbei ein Freiheitsgrad in einer Richtung Y eingeschränkt. In Bezug auf ein rechtshändiges Koordinatensystem verbleibt noch eine Richtung X.

Im befestigten Zustand soll die Schiene 3 in und entgegen der Richtung Z relativ zu dem Anlagekörper 4 verschiebbar sein, um einen Längenausgleich zu ermöglichen. Die Schiene 3 kann hierbei beispielsweise an einem Schachtboden abgestützt sein. In und entgegen der Richtung X sowie in und entgegen der Richtung Y muss die Schiene 3 hingegen gehalten werden, da insbesondere an den Führungsflächen 6, 7 äußere Kräfte auf den Schienenkopf 5 einwirken. Die Schiene 3 kann dann beispielsweise als Führungsschiene 3 für eine Aufzugskabine 15 (Fig. 4) oder ein Gegengewicht dienen.

Das Klemmset 2 weist eine Klemme 20 und einen Abstandshalter 21 auf. In diesem Ausführungsbeispiel weist die Klemme 20 außerdem eine Schraube 22 mit einem Schraubenkopf 23, eine Beilagscheibe 24 und eine Mutter 25 auf. In diesem Ausführungsbeispiel weist der Abstandshalter 21 an seinem Distanzteil 26 außerdem eine Ausnehmung 27 auf. Der Abstandshalter 21 weist außerdem eine Griffleiste 28 auf. Der Abstandshalter 21 ist zungenförmig ausgestaltet.

Das ebenfalls dargestellte Klemmset 2' weist in entsprechender Weise eine Klemme 20', einen Abstandshalter 21', eine Schraube 22' mit einem Schraubenkopf 23', eine Beilagscheibe 24' und eine Mutter 25' auf. Ferner ist der Abstandshalter 21' in entsprechender Weise mit einer in seinem Distanzteil 26' vorgesehenen Ausnehmung 27' (Fig. 2) ausgestaltet, die in der Darstellung der Fig. 1 verdeckt ist. Des Weiteren ist der Abstandshalter 21' in entsprechender Weise mit einer Griffleiste 28' ausgeführt.

Zum Befestigen der Schiene 3 wird zunächst der Anlagekörper 4 auf geeignete Weise im Aufzugsschacht 16 positioniert, wie es auch anhand der Fig. 4 näher beschrieben ist. Dadurch ergibt sich eine definierte Ausrichtung der Oberseite 12 im Aufzugsschacht 16, die in diesem Ausführungsbeispiel zum direkten Anlegen des Schienenfußes 8 dient. Anschließend wird der Schienenfuß 8 mittels der Klemmsets 2, 2' an dem Anlagekörper 4 befestigt. Entlang der Erstreckung 10 können hierbei noch weitere Klemmsets 2" sowie gegebenenfalls weitere Anlagekörper 4' zum Einsatz kommen, wie es in der Fig. 4 veranschaulicht ist.

Fig. 2 zeigt eine schematische Schnittdarstellung der in Fig. 1 gezeigten Schiene bei einer Montage zur Erläuterung des ersten Ausführungsbeispiels. Hierbei ist auf der rechten Seite der Fig. 2 eine Situation während der Montage dargestellt, in der sich der Abstandshalter 27' noch zwischen einer Auflagezone 30' des Abstandshalters 21' und einer Anlageseite 36' an einer Oberseite 37' des Schienenfußes 8 befindet. In der linken Seite der Fig. 2 ist eine fiktive Situation dargestellt, bei der das Klemmset 2 montiert und in einem Zustand gezeigt ist, der sich beim gedanklichen Weglassen der Schiene 3, also ohne einen Schienenfuß 8, ergibt. Dies dient zur Erläuterung einer konstruktiven

Ausgestaltung des Klemmsets 2 in Bezug auf den Schienenfuß 8 und der Funktionsweise der vorgeschlagenen Maßnahmen. Zur Veranschaulichung ist hierbei eine fiktive Position der linken Hälfte der Schiene 3 durch eine unterbrochen dargestellte Linie veranschaulicht.

Die Klemme 20 weist eine Auflagezone 30, eine Federzone 31, eine Übergangszone 32, eine Seitenzone 33 und eine Befestigungszone 34 mit einer Bohrung 35 auf. Eine Anlageseite 36 stimmt in diesem Ausführungsbeispiel mit einer Oberseite 37 des Schienenfußes 8 überein, da keine zusätzliche Lage, beispielsweise eine Gleitlage, zwischen der Auflagezone 30 der Klemme 20 und der Oberseite 37 des Schienenfußes 8 montiert wird. An der Auflagezone 30 der Klemme 20 wird durch die Geometrie des Schienenfußes 8 ein Haltemaß H vorgegeben. Das Haltemaß H ergibt sich hierbei als Distanz zwischen einem Anlagepunkt beziehungsweise einer Anlagelinie der Auflagezone 30 an der Anlageseite 30 und der Oberseite 12 des Anlagekörpers 4 beziehungsweise der Unterseite 11 des Schienenfußes 8. Das Haltemaß H kann hierbei von einem Soll-Haltemaß S aufgrund von Herstellungstoleranzen oder dergleichen abweichen. Diesbezüglich kann sich dann ein Toleranzbereich t für das Soll-Haltemaß S ergeben.

Ausgehend von der in der linken Seite der Fig. 2 dargestellten konstruktiven Ausgestaltung der Klemme 20 ergibt sich ein Verstellweg d für die Auflagezone 30 der Klemme 20, um auf das Haltemaß H zu gelangen. Bei der Montage bedeutet dies, dass die Klemme 20 aufgedehnt wird, wobei eine elastische und gegebenenfalls auch plastische Verformung der Klemme 20 auftritt.

Wie es in der rechten Seite der Fig. 2 dargestellt ist, hat der Abstandshalter 21 zumindest an der hier relevanten Stelle eine Dicke Δd, die einen zusätzlichen Verstellweg Δd bedingt, wenn der Abstandshalter 21 montiert ist. Dies bedeutet, dass es zu einem zusätzlichen Aufdehnen der Klemme 20' über das Haltemaß H hinaus kommt, nämlich um den zusätzlichen Verstellweg Δd. Hierbei treten über den zusätzlichen Verstellweg Δd plastische Verformungen der Klemme 20' auf.

Der zusätzliche Verstellweg Δd ist durch den Abstandshalter 21 als Montageabstand Δd zwischen der Auflagezone 30 der Klemme 20 und der Anlageseite 36 an der Oberseite 37 des Schienenfußes 8 vorgegeben.

Die Klemme 20' weist entsprechend der Klemme 20 auch eine Federzone 31', eine Übergangszone 32', eine Seitenzone 33' und eine Befestigungszone 34' mit einer Bohrung 35' auf.

Plastische Verformungen der Klemmen 20, 20' treten vorzugsweise zumindest im Wesentlichen im Bereich der Federzonen 31, 31' und gegebenenfalls auch im Bereich der Übergangszonen 32, 32' auf. Hingegen kommt es in den Seitenzonen 33, 33' und den Befestigungszonen 34, 34' zumindest zu keinen wesentlichen Verformungen der Klemmen 20, 20'. In diesem Ausführungsbeispiel sind die Klemmen 20, 20' hierfür mit verjüngten Bereichen 38, 38' ausgestaltet, wobei jeweils eine beidseitige Verjüngung 41, 42, 41', 42' vorgesehen ist. Dadurch treten plastische Verformungen im Wesentlichen in den Federzonen 31, 31' auf.

In diesem Ausführungsbeispiel weist der Anlagekörper 4 Durchgangsöffnungen 39, 39' auf, die in und entgegen der Richtung X ein Spiel bei der Befestigung der Klemmen 20, 20' mittels der Schrauben 22, 22' ermöglichen. Hierdurch können die Seitenzonen 33, 33' in Kontakt mit Längsseiten 40, 40' des Schienenfußes 8 gebracht werden, um eine Führung des Schienenfußes 8 zu ermöglichen. Dadurch kann in vorteilhafter Weise ein Freiheitsgrad in beziehungsweise entgegen der Richtung X eingeschränkt werden. Der entgegen der Richtung Y bestehende Freiheitsgrad wird in vorteilhafter Weise ebenfalls von den Klemmen 20, 20' eingeschränkt.

In Fig. 2 ist zur Veranschaulichung auch ein Soll-Haltemaß S und dessen Toleranzbereich t für den Schienenfuß 8 dargestellt. Die Darstellung des Soll-Haltemaßes S und des Toleranzbereichs t erfolgt hierbei ohne Rücksicht auf realistische Größenverhältnisse. Das in der Darstellung exemplarisch gewählte Haltemaß H für den Schienenfuß 8 kann im Extremfall am oberen Ende des Toleranzbereichs t für das Soll-Haltemaß S liegen.

Fig. 3 zeigt eine schematische Schnittdarstellung der in Fig. 1 gezeigten Schiene bei einer Montage zur Erläuterung des ersten Ausführungsbeispiels. Im Unterschied zu der Fig. 2 ist nun die Schiene 3 auch in der linken Hälfte vorhanden und dargestellt, so dass diese beidseitig mittels der Klemmsets 2, 2' an dem Anlagekörper 4 befestigt ist. Hierbei zeigen die linke Seite und die rechte Seite der Fig. 3 allerdings zwei mögliche, sich unterscheidende Ausgestaltungen der Befestigung. In der linken Seite der Fig. 3 ist eine Ausgestaltung dargestellt, in der der Abstandshalter 21 auch nach der Montage zwischen der Anlageseite 36 an der Oberseite 37 des Schienenfußes 8 und der Auflagezone 30 der Klemme 20 verbleibt. In diesem Fall ist der Abstandshalter 21 aus einem Werkstoff gewählt, der im Betrieb ein Kriechverhalten aufweist. Zudem ist der Werkstoff des Abstandshalters 21 so gewählt, dass eine Reibung reduziert ist. Im Betrieb nähert sich dann die Auflagezone 30 der Klemme 20 der Anlageseite 36 an der Oberseite 37 des Schienenfußes 8 an, da der Werkstoff des Abstandshalters 21 infolge des durch die Klemme 20 aufgebrachten Drucks seine Tragfähigkeit verliert und sich zusammendrückt. Durch den Montageabstand Δd ist anfangs ein Abstand zwischen der Auflagezone 30 und der Anlageseite 36 gegeben. Dieser Abstand reduziert sich dabei im montierten Zustand der Aufzugsanlage 1 im Zeitverlauf, bis er vorzugsweise zumindest im Wesentlichen verschwindet und idealerweise einen Wert gleich Null oder zumindest nahe Null, also wenige Prozent seines Anfangswertes, hat.

Bei der in der rechten Seite der Fig. 3 dargestellten Ausgestaltung wird der Abstandshalter 21' noch bei der Montage entfernt. Bei der Inbetriebnahme oder Wiederinbetriebnahme der Aufzugsanlage 1 liegt dann die Auflagezone 30' der Klemme 20' direkt an der Anlageseite 36' beziehungsweise hier der Oberseite 37' des Schienenfußes 8 an.

In beiden Ausgestaltungen verschwindet zumindest im Laufe der Zeit der zusätzliche Verstellweg Δd, so dass sich dann der Verstellweg d einstellt. Der Verstellweg d liegt dann je nach Ausgestaltung der Schiene 3 stochastisch verteilt zwischen einem dₘᵢₙ und dₘₐₓ.

Fig. 4 zeigt die Aufzugsanlage 1 in einer auszugsweisen, schematischen Darstellung, bei der eine Schiene entsprechend dem ersten Ausführungsbeispiel in dem Aufzugsschacht 16 befestigt ist. Der Aufzugsschacht 16 wird in diesem Ausführungsbeispiel durch eine Schachtwand 45 eines Gebäudes 46 begrenzt. Die Anlagekörper 4, 4' sind in diesem Ausführungsbeispiel Bestandsteile von Befestigungsstrukturen 47, 48, die auf geeignete Weise mit der Schachtwand 45 des Gebäudes 46 verbunden werden. Dadurch sind die Anlagekörper 4, 4' ortsfest im Aufzugsschacht 16 angeordnet. Über die Klemmsets 2, 2', 2" wird bei der Montage der Schiene 3 eine Befestigung an den Anlagekörpern 4, 4' ermöglicht. Im befestigten Zustand sind dann die Freiheitsgrade der Schiene 3 in und entgegen der Richtung Y sowie in und entgegen der Richtung X eingeschränkt. Allerdings erlaubt die Befestigung ein Ausweichen der Schiene 3 in und entgegen der Richtung Z. Kommt es beispielsweise im Betrieb aufgrund einer Gebäudesetzung zu einer relativen Längenänderung zwischen der Schiene 3 und dem Gebäude 46, dann kann die Schiene 3 entlang ihrer Erstreckung 10 an den Anlagekörpern 4, 4' ausweichen. Hierdurch können unter anderem aufgrund von hohen mechanischen Spannungen auftretende Verbiegungen der Schiene 3 verhindert werden.

Die zur Veranschaulichung dargestellte Aufzugskabine 15 kann beispielsweise über ein Tragmittel 49 im Aufzugsschacht 16 aufgehängt werden. Eine im Betrieb erforderliche Führung der Aufzugskabine 15 kann dann unter anderem durch ein an der Führungsfläche 6 der Schiene 3 angeordnetes Führungselement 50, wie einer Führungsrolle oder Führungsschuh erfolgen. In der Richtung X und gegebenenfalls der Richtung Y auftretende Kräfte können hier in vorteilhafter Weise von den Klemmen 20, 20' des Klemmsets 2 und des Anlagekörpers 4 sowie weiteren Klemmsets 2' und Anlagekörpern 4' aufgenommen werden.

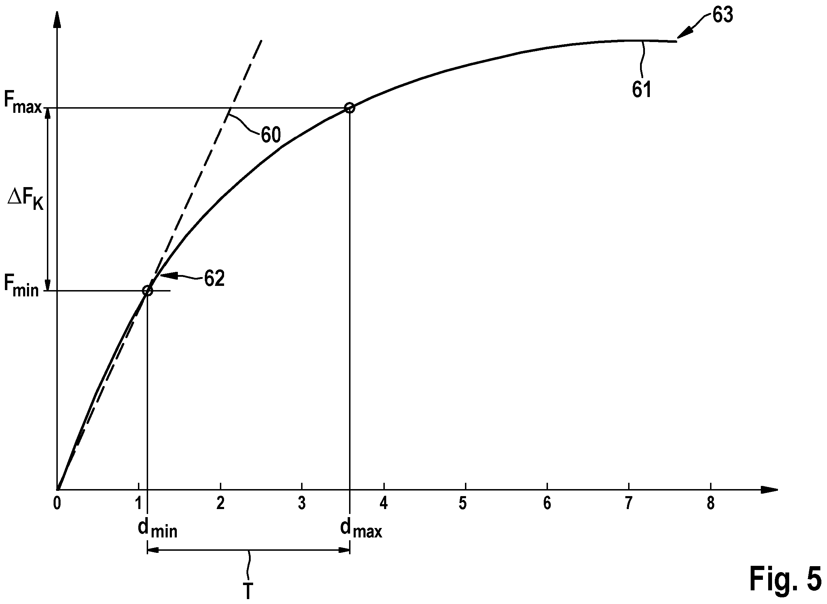

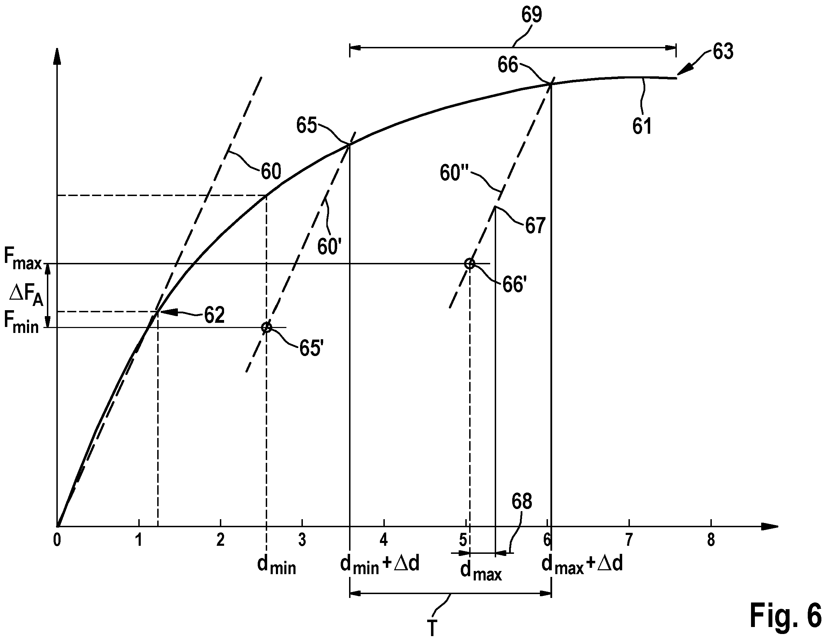

Fig. 5 und Fig. 6 zeigen Diagramme zur Erläuterung der Funktionsweise einer möglichen Ausgestaltung der Erfindung in Bezug auf jeweils ein einzelnes, aber in Bezug auf eine minimale Klemmkraft Fₘᵢₙ jeweils auch angepasst ausgestaltetes Klemmset 2, wenn der Abstandshalter 21 noch während der Montage entfernt wird. Hierbei ist anhand der Fig. 5 eine Montage ohne einen Abstandshalter 21 beschrieben. Im Unterschied dazu ist anhand der Fig. 6 die Wirkung einer Montage des Abstandshalters 21 bei der Befestigung und einer anschließenden Entfernung des Abstandshalters 21 dargestellt.

In den Diagrammen ist an der Abszisse ein Verstellweg mit der Einheit mm angetragen. Ferner ist in den Diagrammen an den Ordinaten eine Klemmkraft der Klemme 20 angetragen, die sich jeweils einstellt. Es versteht sich, dass die angegebenen und beschriebenen Größen zur Beschreibung einer bevorzugten Ausgestaltung dienen, aber nicht einschränkend zu verstehen sind.

In den Diagrammen ist durch eine unterbrochen dargestellte Linie 60 eine Federkennlinie 60 veranschaulicht. Die Federkennlinie 60 beschreibt ein elastisches Verhalten der Klemme 20. Eine charakteristische Verformungskurve 61 der Klemme 20 zweigt etwa ab einem Punkt 62 zunehmend von der Federkennlinie 60 ab. Im Unterschied zu der Federkennlinie 60, entlang der eine Kraftzunahme bei einer kleinen, insbesondere infinitesimalen, Änderung des Verstellwegs unabhängig von dem bereits erfolgten Verstellweg ist, nimmt entlang der Verformungskurve 61 solch eine Kraftzunahme mit zunehmendem, bereits erfolgten Verstellweg in dem hier relevanten Bereich immer weiter ab. Der hier relevante Bereich erstreckt sich hier exemplarisch maximal bis zu einem Punkt 63, da darüber hinausgehende Verstellwege nicht mehr relevant sind.

Die Verformungskurve 61 weist also einen flachen Bereich 69 (Fig. 6) auf, in dem die Verformungskurve relativ zu der Federkennlinie 60 flach verläuft. Der flache Bereich 69 endet hier an dem Punkt 63. Ferner beginnt der flache Bereich rechts vom Punkt 62.

Für die Funktionsweise der Klemme 20 sind ein minimaler Verstellweg dₘᵢₙ und ein maximaler Verstellweg dₘₐₓ relevant. Diese ergeben sich aus einem Toleranzbereich T und aus einer minimal erforderlichen Kraft Fₘᵢₙ. In den Toleranzbereich T geht zumindest der Toleranzbereich t für das Soll-Haltemaß S ein. Der Toleranzbereich t ergibt sich somit beispielsweise aus Herstellungstoleranzen bei der Fertigung der Schiene 3. Außerdem kann in den Toleranzbereich T eine Fertigungstoleranz der Klemme 20 eingehen. Auch wenn ein oder mehrere Zwischenlagen, Gleitlagen, Auflagen oder dergleichen vorgesehen sind, können diesbezügliche Toleranzen in dem Toleranzbereich T berücksichtigt werden. Durch die minimal erforderliche Klemmkraft Fₘᵢₙ ergibt sich bei einer geeigneten Ausgestaltung, die bei der Fig. 5 die Funktion des Abstandshalters 21 nicht berücksichtigt, der minimale Verstellweg dₘᵢₙ. Hierbei wird die Verformungskurve 61 in diesem Ausführungsbeispiel nicht bis zum Punkt 62 durchlaufen, so dass sich eine im Wesentlichen rein elastische Verformung der Klemme 20 ergibt. Über den Toleranzbereich T ergibt sich der maximale Verstellweg dₘₐₓ, über den die Klemme 20 aufgedehnt werden kann. Dann ergibt sich eine maximale Klemmkraft Fₘₐₓ.

Zwischen der maximalen Klemmkraft Fₘₐₓ und der minimalen Klemmkraft Fₘᵢₙ ergibt sich eine Kraftdifferenz ΔF_{K}. Diese Kraftdifferenz ΔF_{K} ist die Kraftdifferenz, wenn bei einer entsprechenden Ausgestaltung der Klemme 20 nur die Klemme 20 ohne einen Abstandshalter 21 montiert wird.

Wenn die Klemme 20 ohne Abstandshalter 21 montiert wird, dann ergibt sich ein Verstellweg d (Fig. 2), der zwischen dem minimalen Verstellweg dₘᵢₙ und dem maximalen Verstellweg dₘₐₓ liegt. Wesentlich ist hierbei, dass toleranzbedingt die sich beim Montieren ergebende Klemmkraft ausgehend von der vorgegebenen Klemmkraft Fₘᵢₙ auch bis auf eine Maximalwert Fₘₐₓ ansteigen kann, wodurch die sich im konkreten Anwendungsfall einstellende Klemmkraft über einen Bereich ΔF_{K} variieren kann. Die maximale Klemmkraft Fₘₐₓ kann hierbei bereits unerwünscht hoch sein. Beispielsweise kann sich die hohe Klemmkraft Fₘₐₓ ungünstig auf den gewünschten Längenausgleich auswirken, da durch diese hohe Reibungskräfte erzeugt werden.

Zur Veranschaulichung kann der Toleranzbereich T beispielsweise wie folgt ermittelt werden. Der Toleranzbereich t für das Soll-Haltemaß S kann aufgrund von herstellungsbedingten Toleranzen bei der Fertigung der Schiene 3 beispielsweise 1,5 mm betragen, was einer Fertigungstoleranz von +/- 0,75 mm entspricht. Für die Klemme 20 können sich +/- 0,5 mm Herstellungstoleranz, also insgesamt eine Toleranzbreite von 1 mm ergeben. In der Summe ergibt sich dann ein Toleranzbereich T von 2,5 mm.

Wie in Fig. 6 dargestellt, ergibt sich beim Einsatz des Abstandshalters 21 ein zusätzlicher Verstellweg Δd, der sich zu einem Verstellweg d addiert, wobei der Verstellweg d hier zwischen dem minimalen Verstellweg dₘᵢₙ und dem maximalen Verstellweg dₘₐₓ liegt. Dadurch wird die Kurve 61 mindestens bis zu einem Punkt 65 und maximal bis zu einem Punkt 66 durchlaufen. Am Punkt 65 ergibt sich bereits sowohl eine plastische als auch eine elastische Verformung der Klemme 20. Nach dem Entfernen des Abstandshalters 21 ergibt sich der Endzustand am Punkt 65'. Um zum Punkt 65' zu gelangen, wird eine zur Federkennlinie 60 parallele Federkennlinie 60' durchlaufen. Die Parallelverschiebung ergibt sich hierbei aufgrund der plastischen Verformung.

Entsprechend ergibt sich der Endzustand ausgehend vom Punkt 66 am Punkt 66', wobei eine zur Federkennlinie 60 parallele Federkennlinie 60" durchlaufen wird.

Am Punkt 65' ergibt sich die minimale Klemmkraft Fₘᵢₙ der Klemme 20. Am Punkt 66' ergibt sich dann die maximale Klemmkraft Fₘₐₓ der Klemme 20. In der Praxis stellt sich dann eine Klemmkraft aus dem Bereich zwischen der minimalen Klemmkraft Fₘᵢₙ und der maximalen Klemmkraft Fₘₐₓ ein. Die Kraftdifferenz ΔF_{A} zwischen der maximalen Klemmkraft Fₘₐₓ und der minimalen Klemmkraft Fₘᵢₙ gibt die Breite ΔF_{A} dieses Bereichs an.

In der Praxis wird der minimale Verstellweg dₘᵢₙ durch die konstruktive Ausgestaltung der Klemme 20 so vorgegeben, dass nach dem Entfernen des Abstandshalters 21 die minimale Klemmkraft Fₘᵢₙ nicht kleiner als eine erforderliche Klemmkraft ist. Beispielsweise ist in der linken Seite der Fig. 2 eine konstruktive Ausgestaltung der Klemme 20 veranschaulicht, die eine entsprechend große Verformung der Klemme 20 mit einem wesentlichen plastischen Verformungsanteil bei der Montage ermöglicht. Hierbei sind allerdings Belastungsgrenzen zu berücksichtigen. Dies wird hier durch die Festlegung eines Punktes 63 erreicht, der von der durch den Punkt 66 gegebenen oberen Grenze in Bezug auf den entlang der Abszisse angetragenen Verstellweg nicht überschritten wird.

Bei der anhand der Fig. 6 beschriebenen Ausgestaltung ergibt sich im Unterschied zu der anhand der Fig. 5 beschriebenen Ausgestaltung der besondere Vorteil, dass die Breite ΔF_{A} kleiner, insbesondere deutlich kleiner, als die Breite ΔF_{K} des sich einstellenden Bereichs für die Klemmkraft der Klemme 20 ist. Ein bestimmter Toleranzbereich (Gesamt-Toleranzbereich) T führt daher bei der anhand der Fig. 6 beschriebenen Ausgestaltung zu einer kleineren Variationsbreite ΔF_{A} der Klemmkraft.

Da die Verformungskurve 61 mit zunehmendem Verstellweg d zunehmend flacher wird, kann durch eine Verschiebung der Punkte 65, 66 in Richtung zu dem Punkt 63 die Größe des Bereichs ΔF_{A} tendenziell verkleinert werden. Deshalb wird der Punkt 65 vorzugsweise in den flachen Bereich 69 der Verformungskurve 61 gelegt, in dem die Verformungskurve 61 relativ zu der Federkennlinie 60 bereits flach verläuft.

Wie in der Fig. 6 veranschaulicht ist, werden der minimale Verstellweg dₘᵢₙ und der maximale Verstellweg dₘₐₓ durch den zusätzlichen Verstellweg Δd, der durch die Dicke Δd des Abstandshalters 21 gegeben ist, entlang der Abszisse nach rechts verschoben. Der Toleranzbereich T wird hierbei gewissermaßen nach rechts in den flachen Bereich 69 verschoben, bleibt aber größenmäßig erhalten.

Ferner ist in Fig. 6 exemplarisch noch eine Situation für eine abgewandelte Ausgestaltung veranschaulicht, bei der der Abstandshalter 21 montiert bleibt, aber ein Kriechverhalten aufweist. Als Beispiel wird die Situation am oberen Ende des Toleranzbereichs T betrachtet. Die Klemme 20 befindet sich dann anfänglich in einem Zustand, der durch den Punkt 66 gegeben ist. Nach und nach läuft der Momentanzustand entlang der Federkennlinie 60" nach links/unten. Nach einiger Zeit wird hierbei beispielsweise ein Punkt 67 durchlaufen, an dem ein Abstand 68 zwischen der Auflagezone 30 der Klemme 20 und der Anlageseite 36 an der Oberseite 37 des Seitenteils 9 des Schienenfußes 8 gegenüber dem Montageabstand Δd reduziert wird.

Da der Schienen-individuelle Startpunkt entsprechend dem Toleranzbereich T stochastisch verteilt zwischen den Punkten 65 und 66 auf der Verformungskurve 61 liegt, ergibt sich die jeweilige Situation durch eine Parallelverschiebung der Federkennlinie 60" in Richtung der Federkennlinie 60'.

Bei einer weiteren Abwandlung kann der Abstandshalter 21 auch mehrteilig, insbesondere mehrlagig, ausgestaltet sein. Bei einer dann möglichen, teilweisen Entfernung des Abstandshalters 21, der reibungsreduzierend wirken kann, kann sich dann bereits vor einer Inbetriebnahme oder Wiederinbetriebnahme der Aufzugsanlage 1 eine hier durch den Punkt 67 verdeutlichte Situation ergeben, bei der der Abstand 68 zwischen der Auflagezone 30 der Klemme 20 und der Anlageseite 36 an der Oberseite 37 des Seitenteils 9 des Schienenfußes 8 gegenüber dem Montageabstand Δd reduziert ist.

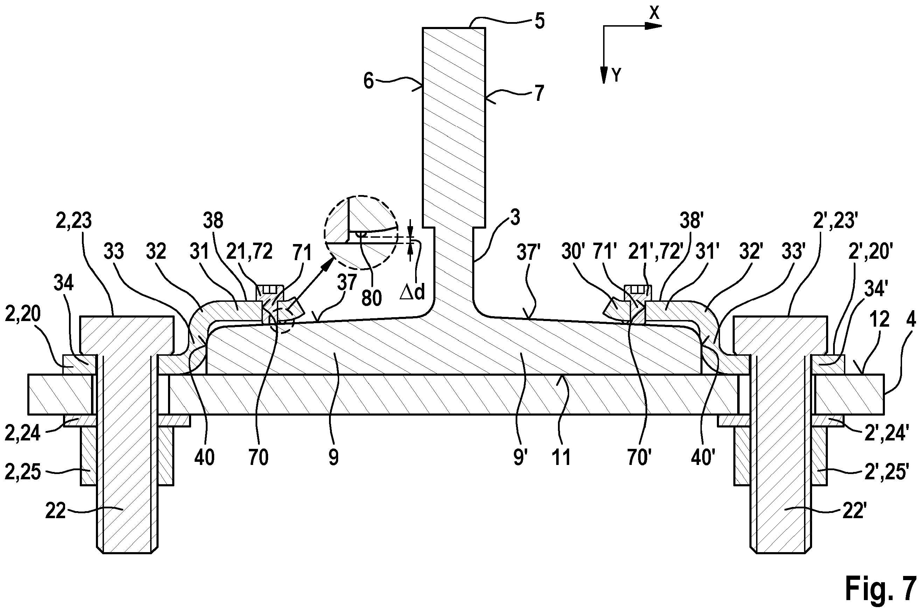

Fig. 7 zeigt ein schematisches Schnittbild der in Fig. 2 dargestellten Schiene 3, die mittels der Klemmsets 2, 2' an dem Anlagekörper 4 befestigt ist, entsprechend einem zweiten Ausführungsbeispiel. In diesem Ausführungsbeispiel weist die Klemme 20 eine Gewindebohrung 70 auf, in die ein Schraubenbolzen 71 einer Schraube 72 eingeschraubt ist. Hierbei ist der Schraubenbolzen 71 so ausgestaltet, dass beim vollständigen Einschrauben der Schraube 72 in die Klemme 20 der zusätzliche Verstellweg Δd als Montageabstand Δd eingestellt ist. Die Schraube 72 dient dadurch als Abstandshalter 21. Bei der Montage kommt es dann sowohl zur elastischen als auch zur plastischen Verformung der Klemme 20.

In entsprechender Weise ist an der Klemme 20' eine Gewindebohrung 70' vorgesehen, in die ein Schraubenbolzen 71' einer Schraube 72' eingeschraubt ist, die entsprechend als Abstandshalter 21' dient. Somit ergeben sich an den Klemmen 20, 20' entsprechende Vorteile bezüglich einer reduzierten Kraftdifferenz ΔF_{A} wie bei dem ersten Ausführungsbeispiel.

An der Anlagezone der Klemme 20 kann eine Auflage 80 vorgesehen sein, an der die Klemme 20 im Betrieb, also nach dem Entfernen des Abstandshalters 21, anliegt. Die Auflage 80 kann hierbei als punktförmige Auflage 80 ausgestaltet sein. Bei einer abgewandelten Ausgestaltung kann die Auflage 80 auch als linienförmige Auflage 80 ausgestaltet sein, die sich vorzugsweise entlang der Richtung Z beziehungsweise koaxial zu der Erstreckung 10 der Schiene 3 erstreckt. Solch eine Auflage 80, insbesondere eine punkt- oder linienförmige Auflage 80, kann in entsprechender Weise auch bei dem ersten Ausführungsbeispiel realisiert sein.

Die Erfindung ist nicht auf die beschriebenen Ausführungsbeispiele beschränkt. So könnte der Abstandshalter beispielsweise auch keilförmig gestaltet sein.

## Patentansprüche

1. Verfahren zum Befestigen einer Schiene (3) einer Aufzugsanlage (1) an zumindest einem ortsfest in einem Aufzugsschacht (16) angeordneten Anlagekörper (4) mittels zumindest eines Klemmsets (2), das eine Klemme (20) und einen Abstandshalter (21) aufweist, wobei die Klemme (20) so an einem an dem Anlagekörper (4) angeordneten Seitenteil (9) eines Schienenfußes (8) der Schiene (3) angeordnet wird, dass die Klemme (20) an einer Befestigungszone (34) der Klemme (20) mit dem Anlagekörper (4) verbindbar ist und dass eine Auflagezone (30) der Klemme (20) an einer Anlageseite (36) an einer Oberseite (37) des Seitenteils (9) des Schienenfußes (8) angeordnet ist, wobei mittels des Abstandshalters (21) ein Montageabstand (Δd) zwischen der Auflagezone (30) der Klemme (20) und der Anlageseite (36) an der Oberseite (37) des Seitenteils (9) des Schienenfußes (8) so vorgegeben wird, dass beim Verbinden der Klemme (20) an ihrer Befestigungszone (34) mit dem Anlagekörper (4) die Klemme (20) teilweise elastisch und teilweise plastisch verformt wird und wobei der Abstandshalter (21) zumindest teilweise entfernt wird und/oder so ausgestaltet wird, dass ein Abstand (68) zwischen der Auflagezone (30) der Klemme (20) und der Anlageseite (36) an der Oberseite (37) des Seitenteils (9) des Schienenfußes (8) zumindest im Zeitverlauf gegenüber dem Montageabstand (Δd) zumindest reduziert wird.

2. Verfahren nach Anspruch 1,
**dadurch gekennzeichnet,**
**dass** ein Toleranzbereich (t) für ein zwischen der Anlageseite (30) an der Oberseite (37) des Seitenteils (9) und dem Anlagekörper (4) für das Seitenteil (9) des Schienenfußes (8) vorgegebene Soll-Haltemaß (S) bestimmt wird und dass der mittels des Abstandshalters (21) vorgegebene Montageabstand (Δd) einen Gesamt-Toleranzbereich (T), in den der bestimmte Toleranzbereich (t) für das Soll-Haltemaß (S) eingeht, in einen relativ zu einer Federkennlinie (60) der Klemme flach verlaufenden Bereich (69) einer Verformungskurve (61) der Klemme (20) verschiebt.

3. Verfahren nach Anspruch 2,
**dadurch gekennzeichnet,**
**dass** der Toleranzbereich (t) für das Soll-Haltemaß (S) zumindest aus einem konstruktionsgemäß vorgegebenen und/oder empirisch bestimmten Toleranzbereich (t) für das Seitenteil (9) des Schienenfußes (8) und gegebenenfalls aus einem konstruktionsgemäß vorgegebenen und/oder empirisch bestimmten Toleranzbereich zwischen der Anlageseite (36) an der Oberseite (37) des Seitenteils (9) des Schienenfußes (8) und der Oberseite (37) des Seitenteils (9) des Schienenfußes (8) bestimmt wird und/oder dass der Gesamt-Toleranzbereich (T) so bestimmt wird, dass in ihn zumindest der Toleranzbereich (t) für das Soll-Haltemaß (S) und eine Fertigungstoleranz der Klemme (20) eingehen.

4. Verfahren nach einem der Ansprüche 1 bis 3,
**dadurch gekennzeichnet,**
**dass** die Anlageseite (36) an der Oberseite (37) des Seitenteils (9) des Schienenfußes (8) als Oberseite (37) des Seitenteils (9) des Schienenfußes (8) gewählt wird oder dass eine Gleitlage an der Oberseite (37) des Seitenteils (9) des Schienenfußes (8) angebracht ist beziehungsweise wird, die als Anlageseite (36) an der Oberseite (37) des Seitenteils (9) des Schienenfußes (8) gewählt wird.

5. Verfahren nach einem der Ansprüche 1 bis 4,
**dadurch gekennzeichnet,**
**dass** der Abstandshalter (21) vorzugsweise unmittelbar nach dem Verbinden der Klemme (20) an ihrer Befestigungszone (34) mit dem Anlagekörper (4) und zumindest vor der Inbetriebnahme oder Wiederinbetriebnahme der Aufzugsanlage (1) entfernt oder zumindest entspannt wird.

6. Verfahren nach einem der Ansprüche 1 bis 4,
**dadurch gekennzeichnet,**
**dass** der Abstandshalter (21) nach dem Verbinden der Klemme (20) an ihrer Befestigungszone (34) mit dem Anlagekörper (4) und zumindest bei der Inbetriebnahme oder Wiederinbetriebnahme der Aufzugsanlage (1) zumindest teilweise montiert bleibt und dass der Abstandshalter (21) so aus einem Werkstoff ausgewählt wird, dass der zumindest teilweise montierte Abstandshalter (21) im Betrieb ein Kriechverhalten aufweist und vorzugsweise bei einer Bewegung des Schienenfußes (8) relativ zu dem Anlagekörper (4) und der mit dem Anlagekörper (4) verbundenen Klemme (20) reibungsreduzierend wirkt.

7. Verfahren nach einem der Ansprüche 1 bis 6,
**dadurch gekennzeichnet,**
**dass** an der Klemme (20) ein verjüngter Bereich (38) ausgestaltet wird, der sich von der Auflagezone (30) zumindest abschnittsweise entlang einer sich an die Auflagezone (30) anschließenden Federzone (31) der Klemme (20) erstreckt.

8. Verfahren nach Anspruch 7,
**dadurch gekennzeichnet,**
**dass** die Klemme (20) zwischen der Befestigungszone (34) und der Federzone (31) eine Seitenzone (33) aufweist und dass die Befestigungszone (34) und die Seitenzone (33) beim Verbinden der Klemme (20) an ihrer Befestigungszone (34) mit dem Anlagekörper (4) im Vergleich zu der Federzone (31) zumindest im Wesentlichen nicht verformt werden.

9. Verfahren nach Anspruch 7 oder 8,
**dadurch gekennzeichnet,**
**dass** die Klemme (20) zwischen der Federzone (31) und einer beziehungsweise der Seitenzone (33) eine gebogene Übergangszone (32) aufweist und dass sich der verjüngte Bereich (38) der Klemme (20) zumindest abschnittsweise von der Federzone (31) entlang der Übergangszone (32) zu der Seitenzone (33) erstreckt.

10. Verfahren nach einem der Ansprüche 1 bis 9,
**dadurch gekennzeichnet,**
**dass** an der Auflagezone (30) der Klemme (20) eine punktförmige Auflage (80) an der Anlageseite (36) vorgegeben wird, dass der Abstandshalter (21) mit einer Ausnehmung (27) ausgeführt wird und dass der Abstandshalter (21) so zwischen der Auflagezone (30) der Klemme (20) und der Anlageseite (36) an der Oberseite (37) des Seitenteils (9) des Schienenfußes (8) montiert wird, dass sich die punktförmige Auflage (80) in der Ausnehmung (27) des Abstandshalters (21) befindet und von der Anlageseite (36) beabstandet ist.

11. Verfahren nach einem der Ansprüche 1 bis 10,
**dadurch gekennzeichnet,**
**dass** der Abstandshalter (21) als zungenförmiger Abstandshalter (21) ausgestaltet ist und/oder eine Griffleiste (28) aufweist.

12. Verfahren nach einem der Ansprüche 1 bis 9,
**dadurch gekennzeichnet,**
**dass** der Abstandshalter (21) einen Schraubenbolzen (71) aufweist und dass der Abstandshalter (21) mit seinem Schraubenbolzen (71) so in eine sich durch die Auflagezone (30) der Klemme (20) erstreckende Gewindebohrung (70) eingeschraubt wird, dass der Montageabstand (Δd) vorgegeben ist.

13. Klemmset (2), das zum Befestigen einer Schiene (3) einer Aufzugsanlage (1) an zumindest einem ortsfest in einem Aufzugsschacht (16) angeordneten Anlagekörper (4) dient, mit einer Klemme (20) und einem Abstandshalter (21), wobei die Klemme (20) so mit einer Befestigungszone (34) und einer Auflagezone (30) ausgestaltet ist, dass diese an einem an dem Anlagekörper (4) angeordneten Seitenteil (9) eines Schienenfußes (8) der Schiene (3) anordenbar, mit ihrer Befestigungszone (34) mit dem Anlagekörper (4) verbindbar und mit ihrer Auflagezone (30) an einer Anlageseite (36) an einer Oberseite (37) des Seitenteils (9) des Schienenfußes (8) anordenbar ist,
**dadurch gekennzeichnet, dass**
der Abstandshalter (21) so ausgestaltet ist, dass mittels diesem ein Montageabstand zwischen der Auflagezone (30) der Klemme (20) und der Anlageseite (36) an der Oberseite (37) des Seitenteils (9) des Schienenfußes (8) so vorgebbar ist, dass beim Verbinden der Befestigungszone (34) mit dem Anlagekörper (4) die Klemme (20) teilweise elastisch und teilweise plastisch verformbar ist, und wobei der Abstandshalter (21) zumindest teilweise entfernbar oder so ausgestaltet ist, dass ein Abstand (68) zwischen der Auflagezone (30) der Klemme (20) und der Anlageseite (36) an der Oberseite (37) des Seitenteils (9) des Schienenfußes (8) im montierten Zustand zumindest im Zeitverlauf gegenüber dem Montageabstand (Δd) reduzierbar ist.

14. Aufzugsanlage (1) mit zumindest einer Schiene (3), die mit einem Verfahren nach einem der Ansprüche 1 bis 12 in einem Aufzugsschacht (16) montiert ist.

15. Aufzugsanlage nach Anspruch 14,
**dadurch gekennzeichnet,**
**dass** die Schiene (3) mittels zumindest eines Klemmsets (2, 2', 2"), das gemäß Anspruch 13 ausgebildet ist, montiert ist.

## Claims

1. A method for fastening a rail (3) of an elevator system (1) on at least one bearing element (4), which is fixed in an elevator shaft (16), by means of at least one clamp set (2) comprising a clamp (20) and a spacer (21), wherein the clamp (20) is arranged on a side part (9) of the rail foot (8) of the rail (3), which is arranged on the bearing element (4), in such a way that the clamp (20) can be connected to the bearing element (4) in a fastening zone (34) of the clamp (20) and that a contact zone (30) of the clamp (20) is arranged on a bearing side (36) on an upper face (37) of the side part (9) of the rail foot (8), wherein a mounting distance (Δd) between the contact zone (30) of the clamp (20) and the bearing side (36) on the upper face (37) of the side part (9) of the rail foot (8) is specified by means of the spacer (21) in such a way that the clamp (20) is in part elastically and in part plastically deformed when the clamp (20) is connected to the bearing element (4) in its fastening zone (34), and wherein the spacer (21) is at least partially removed and/or designed in such a way that a distance (68) between the contact zone (30) of the clamp (20) and the bearing side (36) on the upper face (37) of the side part (9) of the rail foot (8) is at least reduced relative to the mounting distance (Δd) at least over the course of time.

2. The method according to claim 1,
**characterized in**
**that** a tolerance range (t) is determined for a nominal holding dimension (S), which is specified between the bearing side (30) on the upper face (37) of the side part (9) and the bearing element (4) for the side part (9) of the rail foot (8), and in that the mounting distance (Δd) specified by means of the spacer (21) shifts a total tolerance range (T) that includes the certain tolerance range (t) for the nominal holding dimension (S) into a region (69) of a deformation curve (61) of the clamp (20), which extends flatly relative to a spring characteristic (60) of the clamp.

3. The method according to claim 2,
**characterized in**
**that** the tolerance range (t) for the nominal holding dimension (S) is determined at least from a constructively specified and/or empirically determined tolerance range (t) for the side part (9) of the rail foot (8) and optionally from a constructively specified and/or empirically determined tolerance range between the bearing side (36) on the upper face (37) of the side part (9) of the rail foot (8) and the upper face (37) of the side part (9) of the rail foot (8) and/or that the total tolerance range (T) is determined in such a way that it includes at least the tolerance range (t) for the nominal holding dimension (S) and a manufacturing tolerance of the clamp (20).

4. The method according to one of claims 1 to 3,
**characterized in**
**that** the bearing side (36) on the upper face (37) of the side part (9) of the rail foot (8) is chosen as the upper face (37) of the side part (9) of the rail foot (8) and/or that an antifriction layer is arranged on the upper face (37) of the side part (9) of the rail foot (8) and chosen as bearing side (36) on the upper face (37) of the side part (9) of the rail foot (8).

5. The method according to one of claims 1 to 4,
**characterized in**
**that** the spacer (21) preferably is removed or at least relaxed immediately after the clamp (20) has been connected to the bearing element (4) in its fastening zone (34) and at least prior to the commissioning or recommissioning of the elevator system (1).

6. The method according to one of claims 1 to 4,
**characterized in**
**that** the spacer (21) remains at least partially installed after the clamp (20) has been connected to the bearing element (4) in its fastening zone (34) and at least during the commissioning or recommissioning of the elevator system (1), and that the spacer (21) is made of such a material that the at least partially installed spacer (21) has a creep behavior during the operation and preferably acts in a friction-reducing manner with respect to a motion of the rail foot (8) relative to the bearing element (4) and the clamp (20) connected to the bearing element (4).

7. The method according to one of claims 1 to 6,
**characterized in**
**that** a tapered region (38) is formed on the clamp (20), wherein said tapered region extends from the contact zone (30) at least sectionally along a spring zone (31) of the clamp (20), which is located directly adjacent to the contact zone (30).

8. The method according to claim 7,
**characterized in**
**that** the clamp (20) comprises a lateral zone (33) between the fastening zone (34) and the spring zone (31), and in that the fastening zone (34) and the lateral zone (33) are in contrast to the spring zone (31) at least in essence not deformed when the clamp (20) is connected to the bearing element (4) in its fastening zone (34).

9. The method according to claim 7 or 8,
**characterized in**
**that** the clamp (20) comprises a curved transition zone (32) between the spring zone (31) and a or the lateral zone (33), and in that the tapered region (38) of the clamp (20) at least sectionally extends from the spring zone (31) to the lateral zone (33) along the transition zone (32).

10. The method according to one of claims 1 to 9,
**characterized in**
**that** a punctiform support (80) on the bearing side (36) is specified in the contact zone (30) of the clamp (20), in that the spacer (21) is realized with a recess (27), and in that the spacer (21) is mounted between the contact zone (30) of the clamp (20) and the bearing side (36) on the upper face (37) of the side part (9) of the rail foot (8) in such a way that the punctiform support (80) is located in the recess (27) of the spacer (21) and spaced apart from the bearing side (36).

11. The method according to one of claims 1 to 10,
**characterized in**
**that** the spacer (21) is realized in the form of a tab-shaped spacer (21) and/or comprises a handle strip (28).

12. The method according to one of claims 1 to 9,
**characterized in**
**that** the spacer (21) comprises a stud bolt (71), and in that the spacer (21) is screwed into a threaded bore (70) extending through the contact zone (30) of the clamp (20) with its stud bolt (71) in such a way that the mounting distance (Δd) is specified.

13. A clamp set (2) for fastening a rail (3) of an elevator system (1) on at least one bearing element (4) fixed in an elevator shaft (16), wherein the clamp set comprises a clamp (20) and a spacer (21), and wherein the clamp (20) is provided with a fastening zone (34) and a contact zone (30) in such a way that it can be arranged on a side part (9) of the rail foot (8) of the rail (3), which is arranged on the bearing element (4), connected to the bearing element (4) with its fastening zone (34) and arranged on a bearing side (36) on an upper face (37) of the side part (9) of the rail foot (8) with its contact zone (30),
**characterized in that**
the spacer (21) is designed such that a mounting distance (Δd) between the contact zone (30) of the clamp (20) and the bearing side (36) on the upper face (37) of the side part (9) of the rail foot (8) can be specified by means of this spacer in such a way that the clamp (20) can be in part elastically and in part plastically deformed when the fastening zone (34) is connected to the bearing element (4), wherein the spacer (21) can be at least partially removed or is designed in such a way that a distance (68) between the contact zone (30) of the clamp (20) and the bearing side (36) on the upper face (37) of the side part (9) of the rail foot (8) can in the mounted state be reduced relative to the mounting distance (Δd) at least over the course of time.

14. An elevator system (1) with at least one rail (3), which is installed in an elevator shaft (16) with a method according to one of claims 1 to 12.

15. The elevator system according to claim 14,
**characterized in**
**that** the rail (3) is installed by means of at least one clamp set (2, 2', 2"), which is realized in accordance with claim 13.

## Revendications

1. Procédé, destiné à fixer un rail (3) d'une installation d'ascenseur (1) sur au moins un corps d'appui (4) placé de manière stationnaire dans une cage d'ascenseur (16) au moyen d'au moins un kit de serrage (2), lequel comporte une bride de serrage (20) et un espaceur (21), lors duquel l'on place la bride de serrage (20) sur une partie latérale (9) d'un patin (8) du rail (3) placée sur le corps d'appui (4), de telle sorte que la bride de serrage soit apte à être assemblée avec le corps d'appui (4) sur une zone de fixation (34) de la bride de serrage (20) et qu'une zone de support (30) de la bride de serrage (20) soit placée par une face d'appui (36) sur une face supérieure (37) de la partie latérale (9) du patin (8), au moyen de l'espaceur (21), un écart de montage (Δd) étant prédéfini entre la zone de support (30) de la bride de serrage (20) et la face d'appui (36) sur la face supérieure (37) de la partie latérale (9) du patin (8), de telle sorte que lors de l'assemblage de la bride de serrage (20) par sa zone de fixation (34) avec le corps d'appui (4), la bride de serrage (20) subisse une déformation partiellement élastique et partiellement plastique et lors duquel on retire au moins partiellement l'espaceur (21) et/ou on le conçoit de telle sorte qu'un écart (68) entre la zone de support (30) de la bride de serrage (20) et la face d'appui (36) sur la face supérieure (37) de la partie latérale (9) du patin (8) se réduise au moins au cours du temps par rapport à l'écart de montage (Δd).

2. Procédé selon la revendication 1,
**caractérisé**
**en ce que** l'on détermine une plage de tolérance (t) pour une dimension de maintien théorique (S) prédéfinie entre la face d'appui (30) sur la face supérieure (37) de la partie latérale (9) et le corps d'appui (4) pour la partie latérale (9) du patin (8) et en ce que l'écart de montage (Δd) prédéfini au moyen de l'espaceur (21) déplace une plage de tolérance totale (T), dans laquelle est incluse la plage de tolérance (t) déterminée pour la dimension de maintien théorique (S) dans une plage (69) d'une courbe de déformation (61) de la bride de serrage (20) à trajet plat par rapport à une courbe caractéristique de résilience (60) de la bride de serrage.

3. Procédé selon la revendication 2,
**caractérisé**
**en ce que** l'on détermine la plage de tolérance (t) pour la dimension de maintien théorique (S) au moins à partir d'une plage de tolérance (t) prédéfinie spécifiquement à la structure et/ou déterminée de manière empirique pour la partie latérale (9) du patin (8) et le cas échéant, à partir d'une plage de tolérance prédéfinie spécifiquement à la structure et/ou déterminée de manière empirique entre la face d'appui (36) sur la face supérieure (37) de la partie latérale (9) du patin (8) et la face supérieure (37) de la partie latérale (9) du patin (8) et/ou en ce que l'on détermine la plage de tolérance totale (T) en y incluant au moins la plage de tolérance (t) pour la dimension de maintien théorique (S) et une plage de tolérance de fabrication de la bride de serrage (20).

4. Procédé selon l'une quelconque des revendications 1 à 3,
**caractérisé**
**en ce que** l'on choisit la face d'appui (36) sur la face supérieure (37) de la partie latérale (9) du patin (8) comme face supérieure (37) de la partie latérale (9) du patin (8) ou en ce qu'une couche de glissement que l'on choisit comme face d'appui (36) sur la face supérieure (37) de la partie latérale (9) du patin (8) est appliquée sur la face supérieure (37) de la partie latérale (9) du patin (8) ou on l'y applique.

5. Procédé selon l'une quelconque des revendications 1 à 4,
**caractérisé**
**en ce que** l'on retire l'espaceur (21) ou on le détend pour le moins, de préférence immédiatement après avoir assemblé la bride de serrage (20) par sa zone de fixation (34) avec le corps d'appui (4) et au moins avant la mise en service ou la remise en service de l'installation d'ascenseur (1).

6. Procédé selon l'une quelconque des revendications 1 à 4,
**caractérisé**
**en ce qu'**après l'assemblage de la bride de serrage (20) par sa zone de fixation (34) avec le corps d'appui (4) et au moins lors de la mise en service ou de la remise en service de l'installation d'ascenseur (1), l'espaceur (21) reste au moins monté en partie et en ce que l'on choisit l'espaceur (21) dans une matière permettant que l'espaceur (21) au moins monté en partie fasse preuve en service d'un comportement de fluage et de préférence d'un effet réducteur de frottement, lors d'un déplacement du patin (8) par rapport au corps d'appui (4) et à la bride de serrage (20) assemblée avec le corps d'appui (4).

7. Procédé selon l'une quelconque des revendications 1 à 6,
**caractérisé**
**en ce que** sur la bride de serrage (20) est conçue une région amincie (38), qui à partir de la zone de support (30), s'étend au moins par endroits le long d'une zone résiliente (31) de la bride de serrage (20) qui se raccorde sur la zone de support (30).

8. Procédé selon la revendication 7,
**caractérisé**
**en ce qu'**entre la zone de fixation (34) et la zone résiliente (31), la bride de serrage (20) comporte une zone latérale (33) et en ce que lors de l'assemblage de la bride de serrage (20) par sa zone de fixation (34) avec le corps d'appui (4), la zone de fixation (34) et la zone latérale (33) ne se déforment pas pour le moins sensiblement, en comparaison de la zone résiliente (31).

9. Procédé selon la revendication 7 ou 8,
**caractérisé**
**en ce qu'**entre la zone résiliente (31) et une, respectivement la zone latérale (33), la bride de serrage (20) comporte une zone de transition (32) recourbée et en ce que la région amincie (38) de la bride de serrage (20) s'étend au moins par endroits de la zone résiliente (31) le long de la zone de transition (32), vers la zone latérale (33).

10. Procédé selon l'une quelconque des revendications 1 à 9,
**caractérisé**
**en ce que** sur la zone de support (30) de la bride de serrage (20), l'on prédéfinit un support (80) de forme ponctuelle sur la face d'appui (36), en ce que l'on réalise l'espaceur (21) avec un évidement (27) et en ce que l'on monte l'espaceur (21) entre la zone de support (30) de la bride de serrage (20) et la face d'appui (36) sur la face supérieure (37) de la partie latérale (9) du patin (8), de telle sorte que le support (80) de forme ponctuelle se trouve dans l'évidement (27) de l'espaceur (21) et soit écarté de la face d'appui (36).

11. Procédé selon l'une quelconque des revendications 1 à 10,
**caractérisé**
**en ce que** l'espaceur (21) est conçu comme un espaceur (21) en forme de languette et/ou comporte une baguette de préhension (28).

12. Procédé selon l'une quelconque des revendications 1 à 9,
**caractérisé**
**en ce que** l'espaceur (21) comporte un boulon fileté (71) et en ce que par son boulon fileté (71), l'on visse l'espaceur (21) dans un taraudage (70) s'étendant à travers la zone de support (30) de la bride de serrage (20), de sorte à prédéfinir l'écart de montage (Δd).

13. Kit de serrage (2), servant à fixer un rail (3) d'une installation d'ascenseur (1) sur au moins un corps d'appui (4) placé de manière stationnaire dans une cage d'ascenseur (16), pourvu d'une bride de serrage (20) et d'un espaceur (21), la bride de serrage (20) étant conçue avec une zone de fixation (34) et une zone de support (30), de sorte à pouvoir être placée sur une partie latérale (9) d'un patin (8) du rail (3) placée sur le corps d'appui (4), à pouvoir être assemblée par sa zone de fixation (34) avec le corps d'appui (4) et à être placée par sa zone de support (30) sur une face d'appui (36) sur une face supérieure (37) de la partie latérale (9) du patin (8),
**caractérisé**
**en ce que** l'espaceur (21) est conçu de sorte qu'au moyen de ce dernier, un écart de montage soit prédéfinissable entre la zone de support (30) de la bride de serrage (20) et la face d'appui (36) sur la face supérieure (37) de la partie latérale (9) du patin (8), de telle sorte que lors de l'assemblage de la zone de fixation (34) avec le corps d'appui (4), la bride de serrage (20) puisse subir une déformation partiellement élastique et partiellement plastique, et l'espaceur (21) pouvant être retiré au moins en partie ou étant conçu de sorte qu'à l'état monté, un écart (68) entre la zone de support (30) de la bride de serrage (20) et la face d'appui (36) sur la face supérieure (37) de la partie latérale (9) du patin (8) puisse se réduire au moins au cours du temps par rapport à l'écart de montage (Δd).

14. Installation d'ascenseur (1) pourvue d'au moins un rail (3), qui est monté grâce à un procédé selon l'une quelconque des revendications 1 à 12 dans une cage d'ascenseur (16).

15. Installation d'ascenseur selon la revendication 14,
**caractérisée**
**en ce que** le rail (3) est monté au moyen d'au moins un kit de serrage (2, 2', 2"), qui est conçu selon la revendication 13.
